# EUROPÄISCHE PATENTSCHRIFT

(11) **EP 0 848 980 B1**
(45) Veröffentlichungstag und Bekanntmachung des Hinweises auf die Patenterteilung: **03.03.2004**
(21) Anmeldenummer: 97890232.8
(22) Anmeldetag: 25.11.1997
(51) Int. Cl.: B01D 46/04

(54) **Vorrichtung zur Befestigung von Filterschläuchen eines Schlauch-filters an einem Rüttelrahmen**
Assembly for fixing bag filters to a shaking device
Dispositif de fixation de manches filtrantes à un cadre de vibration

(30) Priorität: 18.12.1996 AT 221496
(43) Veröffentlichungstag der Anmeldung: 24.06.1998
(73) Patentinhaber: Scheuch GmbH, 4971 Aurolzmünster (AT)
(72) Erfinder: Scheuch, Alois, 4910 Ried im Innkreis (AT)
(74) Vertreter: Köhler-Pavlik, Johann, Dipl.-Ing.

(56) Entgegenhaltungen:
- EP-A- 0 529 225
- DE-U- 8 136 347
- US-A- 3 395 519
- US-A- 4 383 840
- US-A- 5 061 303
- US-A- 5 308 369

## Beschreibung

Die Erfindung betrifft einen Filterschlauch zur Abscheidung fester Stoffe aus der Luft, wobei der Filterschlauch mit der zu reinigenden Luft von innen beaufschlagbar ist sowie ein geschlossenes und ein offenes Ende aufweist sowie eine Filteranlage zur Abscheidung fester Stoffe aus der Luft mit einem Filtergehäuse und einem den Rohgasraum und den Reingasraum trennenden Filterboden, wobei im Filtergehäuse von innen mit der zu reinigenden Luft beaufschlagte Filterschläuche angeordnet sind.

Schlauchfilter werden zur Abscheidung fester Stoffe, wie z.B. Späne, Staub od. dgl. aus der Luft als Späne- und Staubabscheider in Absauganlagen, insbesondere mit diskontinuierlichen Betrieb verwendet. Die wichtigsten Einsatzgebiete sind die Holz verarbeitende Industrie, sowie Kunststoff- und Papierindustrie. Die Filterschläuche sind üblicherweise unten am Filterboden befestigt und oben an einem Rüttelrahmen aufgehängt. Die staubhaltige Luft tritt von innen in den Filterschlauch ein. An der Schlauchinnenseite werden die Partikel abgeschieden. Die gereinigte Luft tritt entweder als Abluft ins Freie aus oder wird in die Werkshalle, z.B. zu Heizzwecken während der Wintermonate, zurückgeführt. Die an den Filterschläuchen anhaftenden Späne und Stäube werden von Zeit zu zeit durch mechanische Einwirkung von der Filterschlauchwand gelöst und fallen nach unten in eine Staubsammelwanne ab. Die mechanischen Impulse werden durch einen am Rüttelrahmen montierten sogenannten Rüttelmotor erzeugt.

Die US 3 395 519 A zeigt eine Filteranlage zur Abscheidung fester Stoffe aus der Luft der gegenständlichen Art, bei der die Filterschläuche mit ihren oberen geschlossenen Enden lösbar an zumindest einem Rüttelrahmen und mit ihrem unteren offenen Ende am Filterboden befestigt sind. Die Verbindung zwischen den Filterschläuchen und dem Rüttelrahmen bzw. dem Filterboden können nur in aufwendiger Weise hergestellt bzw. gelöst werden.

Die DE 8 136 347 U1 zeigt eine Verbindung von Filterschläuchen zur Abscheidung fester Stoffe aus der Luft mit einem Filterboden, welche einen am Filterboden angeordneten Schlauchstutzen erfordert, in den das untere Ende des Filterschlauchs eingespannt wird. Dies erhöht den Aufwand der Herstellung der Verbindung zwischen Filterschlauch und Filterboden. Die in Bezug auf die Abreinigung wesentlich wichtigere Verbindung des oberen geschlossenen Schlauchendes wird in diesem Dokument nicht im Detail beschrieben.

Bei bekannten Aufhängungen der Filterschläuche am Rüttelrahmen wird beispielsweise eine Metallscheibe mit aufgeschweißtem Bolzen durch den Filterschlauch geschoben. Der Bolzen wird durch eine entsprechende Bohrung am Rüttelrahmen gesteckt und mit einer Schraube fixiert. Der damit verbundene Montageaufwand ist sehr arbeits- und zeitaufwendig. Während der Montage der Filterschläuche ist ein Betrieb der Filteranlage nicht möglich.

Aufgabe der Erfindung ist die Beseitigung dieses Nachteils und die Schaffung eines einfachen und in der Herstellung kostensparenden Filterschlauchs, der am Rüttelrahmen ohne Anwendung von Werkzeug rasch und in einfacher Weise befestigt werden kann.

Eine weitere Aufgabe der Erfindung besteht in der Schaffung einer Filteranlage zur Abscheidung fester Stoffe aus der Luft, bei der die Filterschläuche werkzeuglos und einfach am Rüttelrahmen befestigt werden können.

Die erste Aufgabe wird erfindungsgemäß dadurch gelöst, dass an beiden Enden des Filterschlauchs ein Federring vorgesehen ist, der vom jeweiligen Ende eingeschlossen sein kann, sowie dass der Federring und/oder das den Federring einschließende Ende mit einer Umfangsnut versehen ist, derart, dass der Federring mit der Umfangsnut des geschlossenen Endes mit dem Rand einer Öffnung in einem Rüttelrahmen und der Federring mit der Umfangsnut des offenen Endes mit dem Rand einer Öffnung in einem Filterboden eine Schnappverbindung eingehen kann. Mit Hilfe eines Schnappverschlusses können die Filterschläuche einfach und rasch montiert bzw. demontiert werden, wodurch die Filteranlage während der Montage der Filterschläuche nur kurze Zeit außer Betrieb gesetzt werden muss. In einfacher Weise ist der Schnappverschluss als Federring ausgeführt, welcher an den Enden des Filterschlauchs befestigt ist. Dies ermöglicht durch Eindrücken des Ringes, das Ende des Filterschlauchs in die Öffnung des Rüttelrahmens oder die Öffnung im Filterboden einzuführen, wonach der Federring nach Auslassen desselben mit dem Rüttelrahmen oder dem Filterboden eine Schnappverbindung eingeht, die nach Eindrücken des Federringes wieder gelöst werden kann. Der Federring kann aus Metall oder Kunststoff hergestellt sein. Der Federring und bzw. oder das den Federring einschließende Ende des Filterschlauchs ist mit einer Umfangsnut versehen, welche mit dem Rand der Öffnung des Rüttelrahmens und der Öffnung im Filterboden eine Schnappverbindung eingeht. Durch diese konstruktive Ausgestaltung ist ein guter Halt des Schlauchs in der Öffnung des Rüttelrahmens gewährleistet.

Das geschlossene und offene Ende des Filterschlauchs weist vorteilhafterweise kreisrunden Querschnitt auf.

Gemäß einem weiteren Merkmal der Erfindung ist der Federring bzw. eine Einbettung desselben mit dem Filterschlauch vernäht. Dadurch ist die erforderliche Festigkeit des mit dem Federring verbundenen Filterschlauchs gegeben.

Nach einem weiteren Merkmal der Erfindung ist das Filtermaterial zumindest im Bereich des Federrings zweischichtig, wobei der Federring zwischen den beiden Schichten eingebettet ist. Dadurch wird der Halt des Federrings im Filterschlauch und somit die Festigkeit weiter erhöht.

Nach einem weiteren Merkmal der Erfindung ist das geschlossene Ende des Filterschlauchs durch eine Abdeckung geschlossen, welche in den Innenraum des Filterschlauchs eingreift und einen oberen Ringteil bildet, wobei der Federring zwischen diesem Ringteil und dem Filterschlauch eingeschlossen ist. Diese Konstruktion bietet eine einfache Herstellungsmöglichkeit und kombiniert den notwendigen Verschluss des geschlossenen Filterschlauchendes mit der Einbettung des Federrings im Filterschlauch.

Gelöst wird die zweite erfindungsgemäße Aufgabe durch eine Filteranlage der gegenständlichen Art unter Verwendung von Filterschläuchen gemäß obiger Beschreibung, wobei die Filterschläuche mit ihren geschlossenen Enden lösbar an zumindest einem Rüttelrahmen und mit ihren offenen Enden am Filterboden befestigt sind und wobei der zumindest eine Rüttelrahmen und der Filterboden Öffnungen aufweist, deren Querschnitt im Wesentlichen dem Querschnitt des geschlossenen und offenen Endes eines Filterschlauchs entspricht.

Vorteilhafterweise sind die Öffnungen kreisrund ausgebildet.

Weitere Merkmale der Erfindung werden anhand der Zeichnung näher erläutert, in welcher ein Ausführungsbeispiel eines Schlauchfilters für einen Späne- und Staubabscheider dargestellt ist.

Darin zeigen
Fig. 1 einen lotrechten Querschnitt eines Schlauchfilters in schematischer Darstellung,
Fig. 2 eine Seitenansicht der Befestigung des geschlossenen Endes des Filterschlauchs am Rüttelrahmen in vergrößerter und teilweise geschnittener Darstellung, und
Fig. 3 eine Seitenansicht der Befestigung des offenen Endes des Filterschlauchs am Filterboden in vergrößerter und teilweise geschnittener Darstellung.

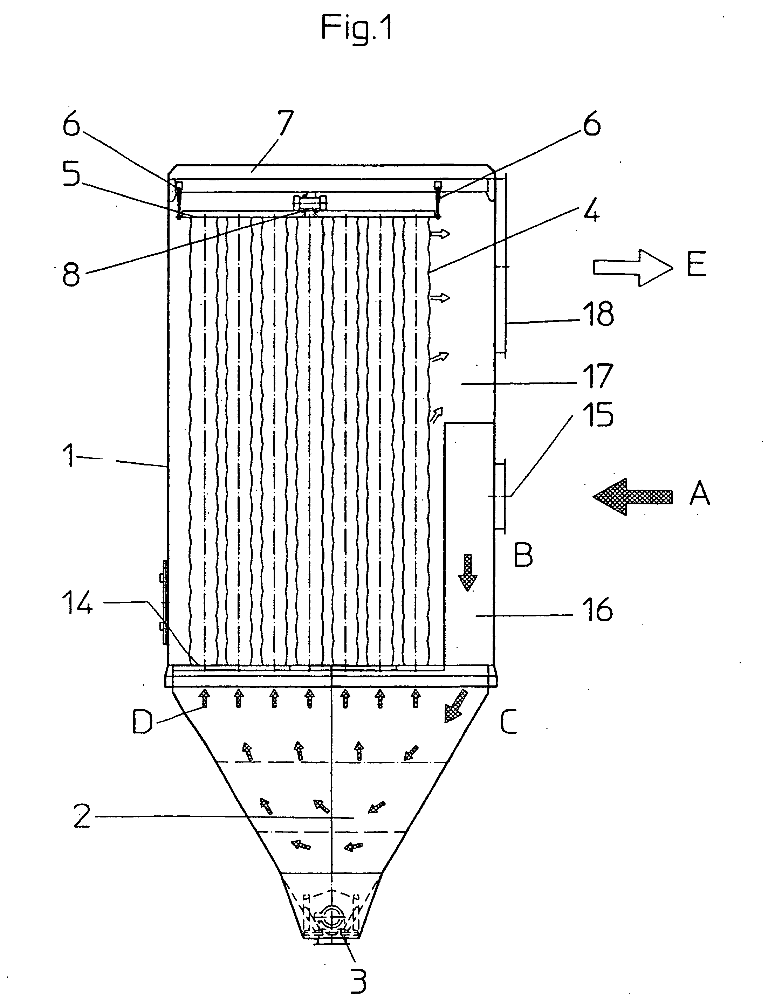

Fig. 1 zeigt eine als Schlauchfilter ausgebildete Filteranlage eines Späne- und Staubabscheiders bestehend aus einem Filtergehäuse 1, welches oben geschlossen ist und am unteren Ende an eine Staubsammelwanne 2 anschließt, die nach unten trichterförmig verjüngt ist. Am Ende dieser Verjüngung sitzt eine Schnecke 3 zum Austragen von abgeschiedenen Grobanteilen. Die Staubsammelwanne 2 bildet keinen Gegenstand der Erfindung und kann auch durch eine andere Einrichtung, z.B. einen Bunker, einen Sammeltrichter od. dgl. ersetzt werden. Im Filtergehäuse 1 ist mindestens eine Reihe nebeneinander angeordneter Filterschläuche 4 untergebracht, welche an ihrem oberen Ende verschlossen und an einem Rüttelrahmen 5 fixiert sind, welcher über Federkloben 6 oder andere elastische Elemente am Deckel 7 des Filtergehäuses 1 befestigt ist. Vorzugsweise sind mehrere Reihen im wesentlichen vertikal angeordnete Filterschläuche 4 hintereinander angeordnet und an einem gemeinsamen oder getrennten Rüttelrahmen 5 gehalten. Die Rüttelbewegung des Rüttelrahmens 5 während der Abreinigung der Filterschläuche 4 besorgt ein Rüttelmotor 8.

Die staubhaltige Luft tritt an einem Rohgasstutzen 15 in Richtung des Pfeiles A ein und wird durch einen Umlenkkanal 16 in Richtung des Pfeiles B in eine Vorabscheidekammer, welche im vorliegenden Falle den oberen Teil der Staubsammelwanne 2 bildet, entsprechend der Richtung des Pfeiles C gelenkt. In der Staubsammelwanne 2 werden die Grobanteile sofort abgeschieden und fallen zum Boden der Staubsammelwanne 2, wo sie durch die Schnecke 3 ausgetragen werden. Der verbleibende Staubanteil wird, wie durch die Richtung der Pfeile D angedeutet ist. in die Filterschläuche 4 gesaugt und an der Schlauchinnenseite abgeschieden. Das Reingas wird, entsprechend der Richtung des Pfeiles E aus dem Raum 17 des Filtergehäuses 1 über einen Reingasstutzen 18 als Abluft ins Freie geblasen oder in die Werkshalle zurückgeführt.

Die Abreinigung der Filterschläuche 4 erfolgt in Betriebspausen durch den Rüttelmotor 8. Durch die erfindungsgemäße Konstruktion werden die Filterschläuche 4 auf schonende Weise vom Staub befreit, wobei das abgeschiedene Material je nach Bauart der Anlage in das Filterunterteil mit dem eingebauten Austragorgan oder in einen untenliegenden Spänebunker fällt.

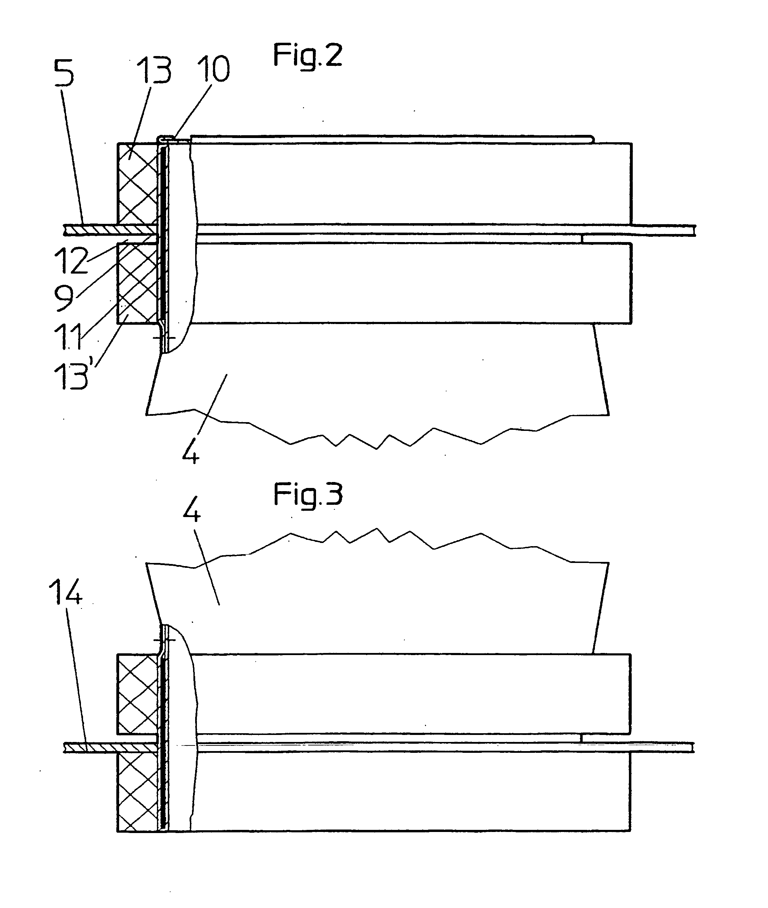

Jeder der Filterschläuche 4, wie im Detail in Fig. 2 und Fig. 3 dargestellt, besteht aus einem Filtermaterial, das beispielsweise aus filzartigem Material aus Textil oder Kunststoffasern hergestellt ist. Zur lösbaren Befestigung der Filterschläuche 4 am Rüttelrahmen 5 ist dieser für jeden Filterschlauch 4 mit einer vorzugsweise kreisrunden Öffnung 9 versehen, deren Durchmesser im wesentlichen gleich dem Außendurchmesser des Filterschlauchs 4 entspricht. Der Filterschlauch 4 ist an seinem oberen Ende durch eine Abdeckung 10 verschlossen, welche mit dem Filterschlauch 4 einstückig ausgebildet oder vernäht sein kann. Das obere Ende des Filterschlauchs 4 ist mit einem Federring 11 versehen, welcher z.B. aus Metall, wie Stahl, aus Kunststoff od. dgl. ausgebildet sein kann. Zur Verbindung des Federringes 11 mit dem Filterschlauch 4 kann dieser zumindest an seinem oberen Ende doppelwandig ausgebildet sein, wobei der Federring 11 zwischen den beiden Filterlagen eingebettet ist.

In einer geänderten Ausführung kann die Abdeckung 10 mit dem oberen Ende der inneren Lage des Filterschlauchs 4 als Haube ausgebildet sein, welche in das obere Ende des Filterschlauchs 4 eingesetzt und mit diesem vernäht ist. Jeder Filterschlauch 4 ist an seinem oberen Ende mit einer umlaufenden Nut 12 versehen, welche im vorliegenden Fall durch zwei übereinanderliegende Wülste 13, 13' begrenzt ist, die vorzugsweise aus dem gleichen Material wie der Filterschlauch 4 bestehen und mit diesem vernäht sind.

Zur Befestigung des Filterschlauchs 4 in einer Öffnung 9 des Rüttelrahmens 5 wird der Federring 11 bzw. das obere Ende des Filterschlauchs 4 in radialer Richtung eingedrückt, sodaß das Ende des Filterschlauchs 4 in die Öffnung 9 des Rüttelrahmens 5 eingefädelt werden kann, worauf das obere Ende des Filterschlauchs 4 bzw. der Federring 11 ausgelassen wird, sodaß der Filterschlauch 4 mit seiner Nut 11 wie ein Schnappverschluß am Rand der Öffnung 9 einrastet und damit einen sicheren Halt des Filterschlauchs 4 am Rüttelrahmen 5 gewährleistet. Diese Art der Verbindung ist leicht herstellbar und erfordert keine Aussteifung des Bodens des Filterschlauchs 4, welcher bei den üblichen Anlagen, beispielsweise durch eine Metallplatte mit einer Anhängevorrichtung ausgestattet war. Diese Art der Verbindung ist wesentlich leichter als die bekannten Verbindungen, sodaß mit leichteren und kleineren Rüttelmotoren 8 das Auslangen gefunden werden kann, als es bei bekannten Konstruktionen der Fall war. Bei der erfindungsgemäßen Ausbildung der oberen Befestigung der Filterschläuche ist der Rütteleffekt trotz Verwendung kleinerer Rüttelmotoren zumindest gleich groß oder größer als bei herkömmlichen Anlagen. Dieser Vorteil wird noch dadurch unterstützt, daß der Rüttelrahmen 5 in einer einfachen Blechpaneelbauweise herstellbar ist.

Das untere, offene Ende der Filterschläuche 4 kann, wie Fig. 3 zeigt, in ähnlicher Weise wie das obere Filterschlauchende am Filterboden 14 befestigt sein.

Die erfindungsgemäße Anlage kann im Unter- oder Überdruckbetrieb laufen. Dies bedeutet, daß die zu reinigende Luft entweder durch die Filteranlage gesaugt oder in die Filteranlage geblasen wird. Zur Stabilisierung der Filterschläuche können zwischen dem oberen und unteren Ende Versteifungsringe vorgesehen sein, wobei deren Anzahl wesentlich geringer als bei bekannten Anlagen sein muß, da der Federring 11 am oberen Ende des Filterschlauchs 4 für eine weitreichende Versteifung sorgt.

Selbstverständlich können im Rahmen der Erfindung verschiedene konstruktive Abänderungen vorgenommen werden. So kann beispielsweise auch der Schnappverschluß anders als beschrieben ausgeführt werden. Wichtig ist, daß die Verbindung des Filterschlauchs mit dem Rüttelrahmen ohne Werkzeug nur durch Eindrücken des oberen Endes des Filterschlauchs in eine Öffnung des Rüttelrahmens eingefädelt werden kann, und nach Auslassen des oberen Endes des Filterschlauchs dieses aufspringt und in den Rand einer Öffnung des Rüttelrahmens einschnappt. Schließlich besteht die Möglichkeit, mehrere Federringe anzuordnen, wobei die Nut zwischen zwei Federringen vorgesehen ist. Die Konstruktion ist auch nicht auf Filterschläuche mit kreisrundem Querschnitt beschränkt, sondern schließt auch ovale oder elliptische Filterschlauchquerschnitte ein. In einem solchen Fall würde auch der Federring und die Öffnung im Rüttelrahmen entsprechend dem Querschnitt des Filterschlauchs geformt sein.

## Patentansprüche

1. Filterschlauch (4) zur Abscheidung fester Stoffe aus der Luft, wobei der Filterschlauch (4) mit der zu reinigenden Luft von innen beaufschlagbar ist sowie ein geschlossenes und ein offenes Ende aufweist, wobei an beiden Enden ein Federring (11) vorgesehen ist, der vom jeweiligen Ende eingeschlossen sein kann, sowie der Federring (11) und/oder das den Federring (11) einschließende Ende mit einer Umfangsnut (12) versehen ist, derart dass der Federring (11) mit der Umfangsnut (12) des geschlossenen Endes mit dem Rand einer Öffnung (9) in einem Rüttelrahmen (5) und der Federring (11) mit der Umfangsnut (12) des offenen Endes mit dem Rand einer Öffnung (9) in einem Filterboden (14) eine Schnappverbindung eingehen kann.

2. Filterschlauch nach Anspruch 1, **dadurch gekennzeichnet, dass** das geschlossene und offene Ende kreisrunden Querschnitt aufweist.

3. Filterschlauch nach Anspruch 1 oder 2, **dadurch gekennzeichnet, dass** der Federring (11) bzw. eine Einbettung desselben mit dem Filterschlauch (4) vernäht ist.

4. Filterschlauch nach Anspruch 3, **dadurch gekennzeichnet, dass** das Filtermaterial zumindest im Bereich des Federrings (11) zweischichtig ist, wobei der Federring (11) zwischen den beiden Schichten eingebettet ist.

5. Filterschlauch nach mindestens einem der Ansprüche 1 bis 4, **dadurch gekennzeichnet, dass** das geschlossene Ende durch eine Abdeckung (10) geschlossen ist, welche in den Innenraum des Filterschlauchs (4) eingreift und einen oberen Ringteil bildet, wobei der Federring (11) zwischen diesem Ringteil und dem Filterschlauch (4) eingeschlossen ist.

6. Filteranlage zur Abscheidung fester Stoffe aus der Luft mit einem Filtergehäuse (1) und einem den Rohgasraum und den Reingasraum trennenden Filterboden (14), wobei im Filtergehäuse (1) von innen mit der zu reinigenden Luft beaufschlagte Filterschläuche (4) nach einem der Ansprüche 1 bis 5 angeordnet sind, wobei die Filterschläuche (4) mit ihren geschlossenen Enden lösbar an zumindest einem Rüttelrahmen (5) und mit ihren offenen Enden am Filterboden (14) befestigt sind, und wobei der zumindest eine Rüttelrahmen (5) und der Filterboden (14) Öffnungen (9) aufweist, deren Querschnitt im wesentlichen dem Querschnitt des geschlossenen und offenen Endes eines Filterschlauchs (4) entspricht.

7. Filteranlage nach Anspruch 6, **dadurch gekennzeichnet, dass** die Öffnungen (9) kreisrund ausgebildet sind.

## Claims

1. A tubular filter element (4) for separating solid substances from air, the tubular filter element (4) being capable of being inwardly admitted by air to be cleaned and having a closed and an open end, wherein a spring ring (11) is provided at both ends which can be enclosed by the respective end, and the spring ring (11) and/or the end enclosing the spring ring (11) being provided with a peripheral groove (12) such that the spring ring (11) with the peripheral groove (12) of the closed end can enter into a snap connection with the rim of an opening (9) in a shaking frame (5) and the spring ring (11) with the peripheral groove (12) of the open end can enter into a snap connection with the rim of an opening (9) in a filter bottom (14).

2. A tubular filter element according to claim 1, **characterised in that** the closed and the open ends have circular cross-sections.

3. A tubular filter element according to claim 1 or 2, **characterised in that** the spring ring (11) or the embedding thereof is sewed together with the tubular filter element (4).

4. A tubular filter element according to claim 3, **characterised in that** the filter material has two layers at least in the region of the spring ring (11), the spring ring (11) being embedded between the two layers.

5. A tubular filter element according to at least one of claims 1 to 4, **characterised in that** the closed end is closed by a cover (10) which engages into the inner space of the tubular filter element (4) and forms an upper ring part, the spring ring (11) being enclosed between this ring part and the tubular filter element (4).

6. A filter system for separating solid substances from air and comprising a filter housing (1) and a filter bottom (14) separating the crude gas space and the clean gas space, tubular filter elements (4) according to any one of claims 1 to 5 inwardly admitted by the air to be cleaned being arranged in the filter housing (1), the tubular filter elements (4) with their closed ends being detachably fastened to at least one shaking frame (5) and with their open ends to the filter bottom (14), and wherein the at least one shaking frame (5) and the filter bottom (14) have openings (9) whose cross-section substantially corresponds to the cross-section of the closed and open ends of a tubular filter element (4).

7. A filter system according to claim 6, **characterised in that** the openings (9) are designed to be circular.

## Revendications

1. Manche filtrante (4) pour séparer des matières solides de l'air, l'air à épurer venant en contact avec la manche filtrante (4) à l'intérieur, de cette manche filtrante qui présente une extrémité fermée et une extrémité ouverte, un anneau élastique (11) étant prévu aux deux extrémités en étant susceptible d'être retenu à l'extrémité concernée, l'anneau élastique (11) et/ou l'extrémité retenant l'anneau élastique (11) étant muni d'une rainure circonférentielle (12) de sorte que l'anneau élastique (11) avec la rainure circonférentielle (12) de l'extrémité fermée puisse établir une liaison par encliquetage avec le bord d'une ouverture (9) prévue dans un cadre vibrant (5), et que l'anneau élastique (11) avec la rainure circonférentielle (12) de l'extrémité ouverte puisse établir une liaison par encliquetage avec le bord d'une ouverture (9) prévue dans un fond de filtre (14).

2. Manche filtrante selon la revendication 1, **caractérisée en ce que** l'extrémité fermée et l'extrémité ouverte présentent une section transversale circulaire.

3. Manche filtrante selon la revendication 1 ou 2, **caractérisée en ce que** l'anneau élastique (11), ou respectivement son moyen d'incorporation, est cousu à la manche filtrante (4).

4. Manche filtrante selon la revendication 3, **caractérisée en ce que** le matériau de filtrage est, au moins dans la zone de l'anneau élastique (11), à double couche, l'anneau élastique (11) étant incorporé entre les deux couches.

5. Manche filtrante selon au moins une des revendications 1 à 4, **caractérisée en ce que** l'extrémité fermée estfermée au moyen d'un couvercle (10) qui s'engage dans l'espace intérieur de la manche filtrante (4) et forme une partie annulaire supérieure, l'anneau élastique (11) étant enfermé entre cette partie annulaire et la manche filtrante (4).

6. Manche filtrante pour la séparation de substances solides de l'air avec un boîtier de filtre (1) et un fond de filtre (14) qui sépare une chambre de gaz non traité et une chambre de gaz épuré, une manche filtrante (4) venant en contact de l'intérieur avec l'air selon l'une des revendications 1 à 5 étant disposée dans le boîtier de filtre (1), la manche filtrante (4) étant fixée de façon amovible avec son extrémité fermée sur au moins un cadre vibrant (5) et par son extrémité ouverte sur le fond de filtre (4), et dans lequel ledit au moins un cadre de vibration (5) et le fond de filtre (14) présente des ouvertures (9) dont la section transversale correspond sensiblement à la section transversale de l'extrémité fermée et de l'extrémité ouverte d'une manche filtrante (4).

7. Installation de filtrage selon la revendication 6, **caractérisée en ce que** les ouvertures (9) présentent une forme circulaire.
